# EUROPEAN PATENT APPLICATION

(11) **EP 1 096 807 A2**
(43) Date of publication of application: **02.05.2001**
(21) Application number: 00122821.2
(22) Date of filing: 20.10.2000
(51) Int. Cl.: H04Q 3/00, H04M 11/04

(54) **Call routing based on alarm reports**

(30) Priority: 25.10.1999 US 426315
(71) Applicant: Alcatel USA Sourcing, L.P., Plano, Texas 75075-5813 (US)
(72) Inventor: Stevens, Gilman R., Fairview, Texas 75069 (US)
(74) Representative: Dreiss, Fuhlendorf, Steimle & Becker

(57) **Abstract**

A method and apparatus is provided for generating a telephone connection to a user to convey information regarding alarm conditions. In response to data from a processing device, such as stock information or network status information, an SCP (32) initiates a connection to the user. Information regarding the present status of the user is retrieved by the SCP (32) from said one or more databases. A routing path is generated in response to said retrieved information. The SCP (32) attempts connections with each of the devices in the routing path until a connection is completed. The alarm condition is then conveyed to the user by generating a voice message for a telephonic device or a text message for an alphanumeric paging device.

## Description

### BACKGROUND OF THE INVENTION

### 1. TECHNICAL FIELD

This invention relates in general to telecommunications and, more particularly, to routing telephone calls.

### 2. DESCRIPTION OF THE RELATED ART

It is often desirable to monitor information remotely. The information could be, for example, associated with the work of a person, such as alarms responsive to the operation of a computer network or an assembly line, or the alarms could be associated with other inherently remote information, such as stock/bond/option quotes (hereinafter, collectively referred to as "stock information") or other price information. Often times, the person is only interested in being notified when certain criteria associated with the information have been met. For example, a person may be interest when a stock passes a certain level or changes by a certain percentage within a given time period.

Certain system exist for notifying a person of such conditions. For example, many stock portfolio programs will monitor stock prices and send an e-mail to a user if certain thresholds are reached. If the user has an e-mail account that is directed to pager, these programs can be used to notify the person of the alarm condition. Other programs send information directly to a pager.

This type of program is very limited in its application. First, the programs do not take into account the many devices that a user may have. For example, many people with cellular phones do not feel the need to have a pager and do not want to carry an additional device. Second, the programs cannot take into account varying degrees of importance associated with the alarms and present circumstances of the user. If a user is at a meeting, he or she may not want to be interrupted, except in the event of extremely important data.

Therefore, a need has arisen for a method and apparatus for conveying alarm information.

### BRIEF SUMMARY OF THE INVENTION

The present invention provides a method and apparatus for generating a telephone connection to a user in response to information in a computer-generated report. In response to an event indicated in the report, one or more databases associated with the user are identified. Information from said one or more databases is retrieved. A routing path comprising connection information for multiple communication devices in a prioritized order is generated in response to said retrieved information.

The present invention provides significant advantages over the prior art. Information from the computer-generated report can be used to contact a party of interest, in the most convenient manner possible. The information that generates the call could be, for example, from reports detailing the status of machinery or computer systems. Further, stock information could be conveyed to investors to aid in timely trading decisions.

### BRIEF DESCRIPTION OF THE SEVERAL VIEWS OF THE DRAWINGS

For a more complete understanding of the present invention, and the advantages thereof, reference is now made to the following descriptions taken in conjunction with the accompanying drawings, in which:
- Figure 1: illustrates a diagram showing the array of communications devices available to a user;
- Figure 2: illustrates a block diagram of a system for generating a routing path in view of information stored in an IT (information technology) system;
- Figure 3: illustrates a diagram showing an SCP (service control point) communicating with a number of databases to obtain information for generating a routing path;
- Figure 4: illustrates a flow chart describing a first embodiment of generating a routing path;
- Figure 5: illustrates a flow chart describing a second embodiment of generating a routing path;
- Figure 6a: illustrates a block diagram of an embodiment where alarm conditions from a report are conveyed to a user;
- Figure 6b: illustrates a flow chart describing the steps of conveying the alarm conditions; and
- Figure 7: illustrates a particular embodiment used to convey alarms from stock information to a user.

### DETAILED DESCRIPTION OF THE INVENTION

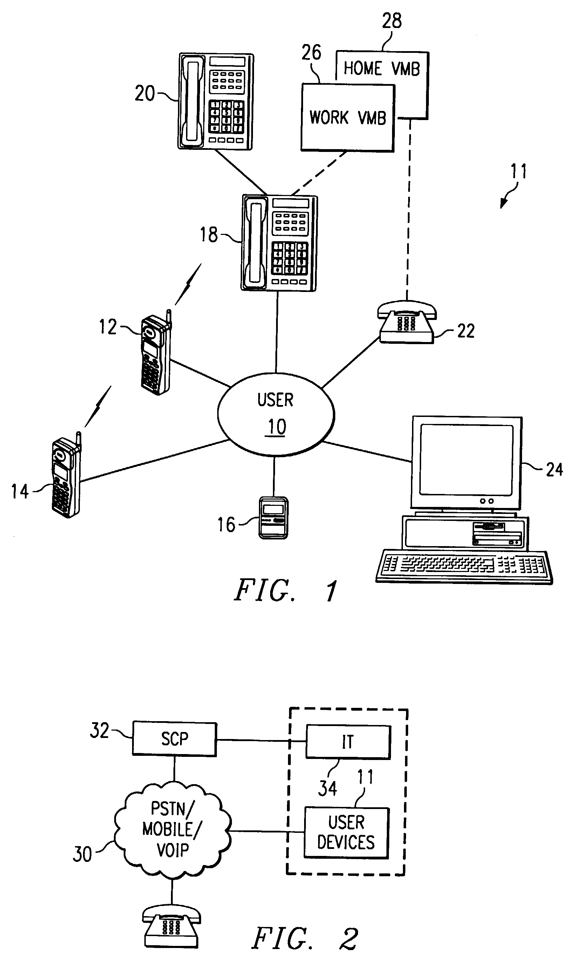

The present invention is best understood in relation to Figures 1-7 of the drawings, like numerals being used for like elements of the various drawings.

Figure 1 illustrates the staggering array of communications devices available to a user. A user 10 may have access to any combination of: cellular phones (work and/or personal) 12, satellite phones 14, pager 16, wireline (office) phone 18, secretary's phone 20, home phone 22, computer communications (e-mail and/or Internet (VOIP) phone) 24, work voice mail box 26 and home voice mail box 28. Other technologies, such as smart phones, are likely to be available in the near future.

The vast array of communication devices also entails complexity. First, a calling party needs to make a number of decisions prior to making a call - which device to contact first, which device to contact if the user 10 (the called party) does not answer the first device, and so on. Second, the user 10 may wish to prevent certain calls to certain device at certain times. For example, if the user 10 was giving a presentation, the user may not want to receive calls or pages during the presentation. The user 10 could, of course, turn off his pager and mobile phones. But doing so results in all calls being rejected. If the user 10 wants certain calls to proceed - for example, emergency calls from a family member, or a call about information pertinent to the presentation - then the user 10 must be willing to accept all calls to that device.

Figure 2 illustrates a basic block diagram of an embodiment of the invention that reduces the complexity of completing a connection between two parties. While this invention could be used in either a commercial or personal setting (or a setting which involves both), it will be described in connection with a commercial setting, since this embodiment is typically more wide-ranging in its application.

A call is made through the PSTN, mobile (cellular or satellite), or VOIP (Voice Over Internet Protocol) network 30 to a destination number. Information is passed to an SCP (service control point) 32, which recognizes the number as one associated with a user 10 of a call routing service. The SCP 32 retrieves information from one or more databases in an IT (information technologies) infrastructure 34 corresponding to the destination number. The IT infrastructure is an information system associated with the user; typically, this includes a company's network and databases. The connection between the SCP 32 and the IT infrastructure 34 could be a hardwired network connection or it could be accomplished through the Internet or other global network, for example. Within the IT infrastructure, the SCP 32 retrieves information about the user 10 and about the calling party and defines a routing path based on this information. This routing path is used to make an initial connection to one of the user's devices. If the device is unavailable (busy or unpowered), the path may provide an order through which the user's other devices are accessed to complete the call.

In operation, the IT infrastructure 34 contains one or more database that may be accessed, directly or indirectly, by the SCP 32. One such database could be associated with calendar/contact software used by the user of the call routing service. Another database could be an organization chart which may identify the calling party status relative to the user. A third database could be a customer database that may identify the calling party as a customer, and the importance of the customer. These databases may be of the type typically used in the operation of the user's business.

Based on the information gathered from the IT infrastructure, the SCP produces a path to route the call (the routing selection logic 35 could alternatively be part of the IT infrastructure). The SCP 32 would provide information to enable the PSTN/Mobile/VOIP network 30 to make connections between the calling party and the user 10.

The IT databases could be of several types. The calendar/scheduling/contact database could be of the type associated with commonly used programs, such as MICROSOFT OUTLOOK by Microsoft Corporation, SIDEKICK by Starfish Software, Inc., among others. With this type of software, each user in a commercial setting typically would have a personal database, which could be stored on a server or on the user's computer. Alternatively, enterprise-wide calendar/scheduling/contact software could be used, where the database(s) that stores the information for the users is centrally located. In either case, the SCP 32 could access the needed information from the IT infrastructure 34, either directly from a server, or through a network connection to the user's computer (or other computer on the network).

Once the information is retrieved, routing selection logic determines which of the user's devices should be included in the routing path, and prepares an order in which the devices are accessed. For example, if the calendar software indicates that the user is in a staff meeting at the time the call is placed, this information would be used to determine whether the call should be directed to a device which could be answered by the user at the meeting, such as a mobile phone or a phone in the conference room. If the calling party's user ID indicates that the call is from a person who ranks higher on the organization chart (by reference to the organization chart database) or is from an important customer (by reference to the customer database) or is from an individual or company specified by the user 10, the call could be connected to the user's mobile phone. If the mobile phone is unavailable (busy/turned-off/not answered), the call could be directed to the user's secretary's station. If that is not answered, the caller could be connected to the user's voice mail, with a message to the user's pager showing the caller's name and number. Long distance calls could be connected to a mobile phone if the wireline phone was not answered. Other calls of medium importance could be directed to voice mail, and a message with the calling party's name and number could be sent to the user's pager. Calls of low importance or unknown importance could be directed to the user's secretary and, if there is no answer at the secretary's station, to the user's voice mail without paging the user.

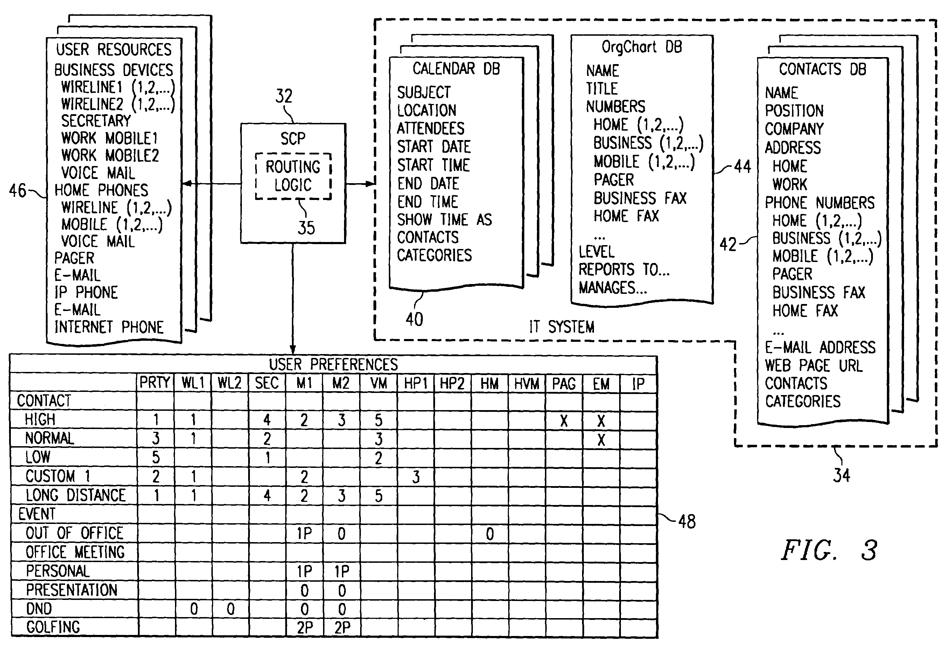

Figure 3 illustrates the information used by the SCP to form routing paths in greater detail. Several databases are accessible to the SCP from the IT infrastructure 34, including a Calendar (Schedule) database 40, a Contacts database 42 (this embodiment assumes that the contacts database includes the Customer database, although the Customer database could be separate), and an OrgChart database 44. The Calendar database includes fields for Subject, Location, Attendees, Start Date, Start Time, End Date, End Time, Contacts and Categories. The Contacts database includes fields for Name, Job Title, Company, Address (Home and Work), Phone Number (Home1, Home2, Mobile1, Mobile2, Business1, Business2, Pager, Business Fax, Home Fax, with other User defined number fields available), Email, Web Page Address, Contacts, and Categories. The OrgChart database includes fields for Name, Job Title, Phone Number (Home1, Home2, Mobile1, Mobile2, Business1, Business2, Pager, Business Fax, Home Fax, with other User defined number fields available), Level, Reports To, and Manages.

In addition, the SCP 32 has access to two other databases, User Resources 46 and User Preferences 48) which could be stored in the IT infrastructure 34 or in another location associated with the SCP 32. The User Resources database 46 includes fields for the address/numbers associated with each of the devices 11 for each user. In the illustrated embodiment, these devices include Wireline Phone Numbers (Home and Business), Secretarial Numbers, Mobile Numbers (Business and Personal), Voice mail (Business and Personal), Pager numbers, E-mail addresses, and Internet Phone (IP address). The list shown in Figure 3 is not intended to be inclusive of all possible devices 11, nor is it likely that a typical user would have access to all of the listed devices.

The User Preferences database 48 defines routing paths. Figure 3 illustrates several routing paths: Normal, High Priority, Low Priority, Custom1 and Long Distance.

The Calendar and Contacts databases can be supported by one of several commercially available databases, such as OUTLOOK 2000, or could be a proprietary database. The SCP 32 need only know how to access data from the database. The Subject field of the Calendar database 40 stores a title for the event, such as "Staff Meeting", "Vacation", or "Doctor's Appointment". The Location field stores a location, if desired, such as "Conference Room 101". The Attendees field stores names of other attendees, if desired. The Start Date and Start Time fields store the date and time that the event starts and the End Date and End Time fields store the date and time that the event ends. The Show Time field allows the user to show the time to others with access to the user's schedule as "Free", "Busy", "Out of Office", and so on. The Contacts field links to contacts in the Contact Database. The Categories field provides a selection of categories that describe the event, such as "Holiday", "Personal", "High Priority" and so on. In the preferred embodiment, the Categories field allows user definable fields.

The Name field of the Contacts database 42 stores the name of the contact (some databases may split this field into First, Last, Middle, Prefix and Suffix fields). The Job Title field stores the position of the contact. The Company field lists the contact's company. The Address fields provide home and work addresses for the contact. The Phone number fields provide multiple numbers associated with the contact. The E-mail field lists an e-mail address for the contact. The Web Page address lists a URL (Uniform Resource Locator) associated with the contact. The Contacts field provides links to other associated contacts in the Contact database and the Category field provides Categories which may be selected to describe the contact, such as "Customer", "Vendor", "Family", "Friend" and user definable fields.

In operation, the SCP 32 uses the IT infrastructure 34 to set up an incoming call to a subscribing user. Using Caller ID technology, the SCP 32 will know the number of the calling party. The Contacts database 42 for the user (the called party) is accessed, along with the OrgChart database, based on the calling party's telephone number, to obtain information that will be used to generate a calling path. Similarly, the user's Calendar database 40 is accessed to determine the present status of the called party.

The information regarding the status of the calling party and the status of the user are combined to determine a routing path in conjunction with the User Preference database. For purposes of illustrations, it is assumed that the user has enabled one of the following status levels for each contact in the Contact database: High Priority, Normal Priority, Low Priority, or Custom1. Whether a call was long distance could be determined either from the Caller ID or information in the Contacts database 42. Contacts that do not have a status level enabled will be assumed to be Normal Priority. Each status level has a corresponding field in Contacts portion of the User Preferences database. In practice, the available status levels could vary from those shown. If the number corresponds to a person in the OrgChart database, the status level can be assigned by the relative positions (defined in Title field of the OrgChart database 44) of the calling and called parties; if the calling party is at a higher position than the called party in the organization, according to the OrgChart database, a High Priority is assigned by default. If the calling party is at the same level, a Normal Priority is assigned. If the calling party is at a low level, then a Low Priority is assigned. In the preferred embodiment, the user can override the default status levels for individuals. For example, a user may wish to assign a High Priority to his or her secretary or next-in-command. This same priority scheme could be used in connection with a Customer database, or with the Contacts database.

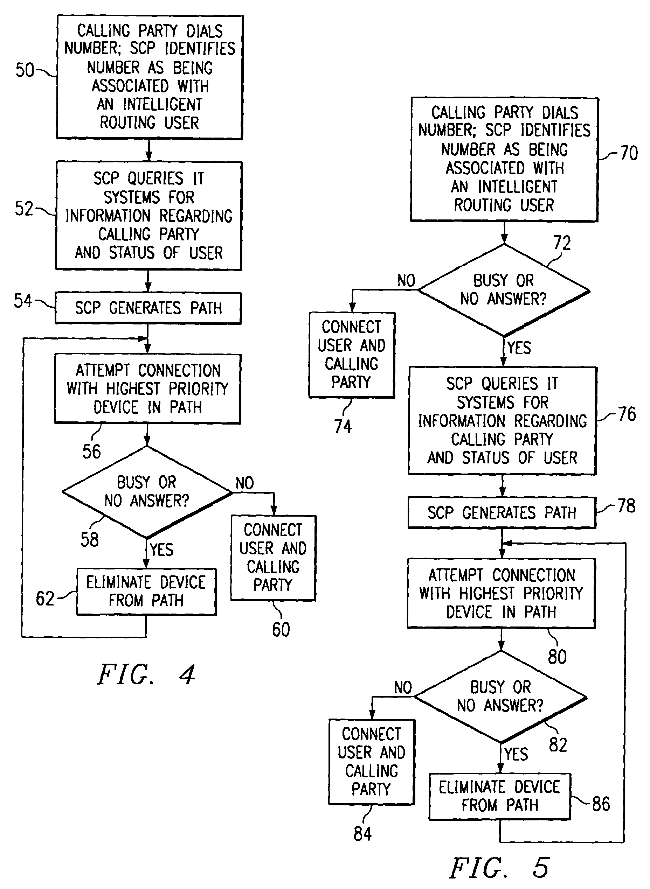

Figure 4 illustrates a first embodiment for accessing a user using the present invention. In block 50, the calling party dials the number of a party. The request is passed to an SCP 32, which identifies the number (or IP address for VOIP) as being associated with a user of the intelligent routing services (if the called party does not subscribe to intelligent routing services, the call is completed as normal). In block 52, the SCP 32 queries the IT infrastructure and retrieves information regarding the calling party from the Contacts 40 and/or OrgChart 44 databases and retrieves information regarding the present status of the user from the Calendar 40 database. In block 54, the information from the Contacts 42 and/or OrgChart 44 database is used to generate a routing path. As shown in Figure 3, the each path in the Contacts portion of the User Preference database 48 sets forth an order in which connections to the user are made by the PSTN/Mobile/VOIP network 30, with "1" being the highest priority. In blocks 56 through 62, the highest priority device is accessed first and if that device is not answered, the next priority device is accessed, until a connection can be made.

The generation of the routing path could be performed in a number of ways. In the illustrated embodiment of Figure 3, an initial path is generated using the Contacts portion of the User Preferences database 48, based on the status of the calling party, as retrieved from the Contacts database 42 and the OrgChart database 44. For example, the SCP 32 may access the Contacts database 42, perform a query based on the telephone number of the calling party, and determine a priority for that user based on the Categories field of the calling party's record in the Contacts database 42.

The Contacts portion of the User Preferences database provides a plurality of different paths that could be assigned for different contacts. For the High Priority path, devices are accessed in the following order: Work Wireline1, Work Mobile1, Work Mobile2, Secretary Wireline, and Voice Mail. A page message and an e-mail message are also left for the user (if a personal connection is not made; i.e., if the call is completed by access to the voice mail or secretary wireline phone). In a Normal Priority Path, the accesses occur in the following order: Work Wireline1, Secretary Wireline and Voice Mail, with a message left in the users e-mail. In the Low Priority Path, connections are made to the Secretary Wireline and, if busy or no answer, to the voice mail. Custom Paths are also provided for more specific situations. For example, a Custom Path could be provided for the immediate family.

In the illustrated embodiment, the path provided by the Contact portion of the User Preference Database 48 can be modified depending upon the information from the Calendar database 40. This takes into consideration the present circumstances of the user. For example, if the user is giving a presentation, he or she may not want to be disturbed even by High Priority contacts. On the other hand, if the user is in a meeting, he or she may not want calls from a family member, unless the call is an emergency. The Event portion of the User Preference database 48 provides for these situations.

Each path in the Contacts portion of the User Preference database 48 has a corresponding priority number. For example, the High Priority path has a priority of "1", the Custom1 path has a priority of "2" and the Normal Path has a priority of "3". The priority number need not be unique - more than one path could have a priority of "1", for example.

The Event portion narrows devices that are accessed depending upon the nature of a current event scheduled in the Calendar database. If there is no event scheduled, the path defined by the Contacts database will be used. If, however, an event is scheduled, the connection to one or more devices may be bypassed, depending upon the priority associated with the path. For example, in an Out-of-Office Meeting, the Work Mobile1 phone and the Work Mobile2 phone are accessible only if the path has a priority of "1" (or higher, in this case there are no higher priorities). Thus, the Work Mobile1 phone would not be accessible to a caller in a Custom1 path, although it would be accessible to a caller in a High Priority Path.

In order to take advantage of the events portion of the User Preferences database 48, the user enables a status level for each event in Categories field of the Calendar database. Those shown in Figure 3 include: Out of Office Meeting, In-Office Meeting, Presentation, Personal Appointment, Golfing and Do Not Disturb. These status levels have a corresponding field in the Events portion of the User Preferences database. Additional user status levels could also be provided.

In addition to providing an additional method of filtering calls to certain devices at certain times, the Event portion of the User Preference database also can enable "prompting" for certain devices at certain times. In Figure 3, a device with prompting enabled has a "P" in the Event portion of the User Preferences. A prompt allows certain parties to connect to a device during certain events, but asks the calling party if a connection is desirable prior to prompting. For example, a user may be in an Out of Office meeting when a family member makes a call. In this circumstance, the user may want to receive the call at his or her mobile phone, but only if the call is important. Accordingly, if a prompt is selected, the SCP may use interactive voice response (IVR) to prompt the user as to whether a connection is desired before attempting a connection to a mobile device. The prompt could depend upon the status of the user. For example, if the user was in a meeting, the SCP could prompt, "〈user name〉 is at a meeting at the present moment. If you wish to connect to 〈user name〉's phone, press '1'; for voice mail, press '2'; for an operator, press '3' ". The connection would then be made according to the calling party's input on the phones keypad. Similarly, if the user was at a doctor's appointment or playing golf, the SCP could prompt "〈user name〉 is out of the office at the present moment. If you wish to connect to 〈user name〉's phone, press '1'; for voice mail, press '2'; for an operator, press '3' ".

Figure 5 illustrates an alternative embodiment, where the routing path is formed only if the initial call from the calling party cannot be completed, either because of a busy condition or no answer. In block 70, the calling party dials the number of a party. If there is a busy condition or a no answer condition in decision block 72, the request is passed to an SCP 32, which identifies whether the number is associated with a user of the intelligent routing services. Otherwise, the call is completed in block 74. In block 76, the SCP 32 queries the IT infrastructure and retrieves information regarding the calling party from the IT databases (Contacts/Customer/OrgChart) and retrieves information regarding the present status of the user from the Calendar 40 database. In block 78, the information from the Contacts 42 and/or OrgChart 44 database is used to generate a routing path, as discussed above. In blocks 80 through 86, the highest priority device is accessed first and if that device is not answered, the next priority device is accessed, until a connection can be made.

Many variations could be made to the embodiments described herein. As discussed above, several different databases could be used to generate the path, such as a Calendar, Contacts, OrgChart, or Customer database. The method of generating a path from the information derived in the databases could also vary from that discussed above. For example, any combination of the information from the databases discussed herein could be used to generate the paths. In some embodiments, the company may wish to have a greater say in whether a customer call is forwarded to a mobile phone. In that instance, the Customer database may be maintained firm-wide (as opposed to the illustrated embodiment of Figure 3, with the Customer included in the user's Contacts database), with no discretion on the part of the user on the relative priority of a customer. Also, decisions on the routing path could be made entirely on any one of the databases. For example, the routing path could be determined entirely based on the whereabouts of the user by reference to the Calendar (or similar) database or entirely on the priority of the calling party, by reference to one or more of the Customer, Contacts or OrgChart databases.

Further, while the preferred embodiment illustrates fields and portions of fields (i.e., which categories are enabled in the Categories field), information could be deduced from entries. Accordingly, if the Subject field of the Calendar database holds the data "Meeting at School", the SCP 32 could deduce that the user was on personal business based on the keyword "school".

The location of the databases could vary from what is shown in Figure 3. In most cases, the User Resources database 46 and User Preference database 48 could be part of the IT systems 34 or maintained by the SCP 32. Communication to the various databases could be made through a variety of channels including, but not limited to, the Internet or other global network, dedicated wireline, or wireless communication. If the User Resources database 46 and the User Preferences database 48 are maintained at the site of the SCP 32, users could change their information in these databases through an Internet connection or other suitable connection.

The routing logic 35 could be located either in the SCP 32 or in the IT infrastructure 34. If the routing logic 36 is located within the IT infrastructure, the SCP 32 could request the information for the next device in the path from the IT infrastructure 34 each time a device was busy or unanswered.

This embodiment of the present invention provides significant advantages over the prior art. First, calls can be routed according to their importance. Second, call can be routed in consideration of the whereabouts of the called party or calling party.

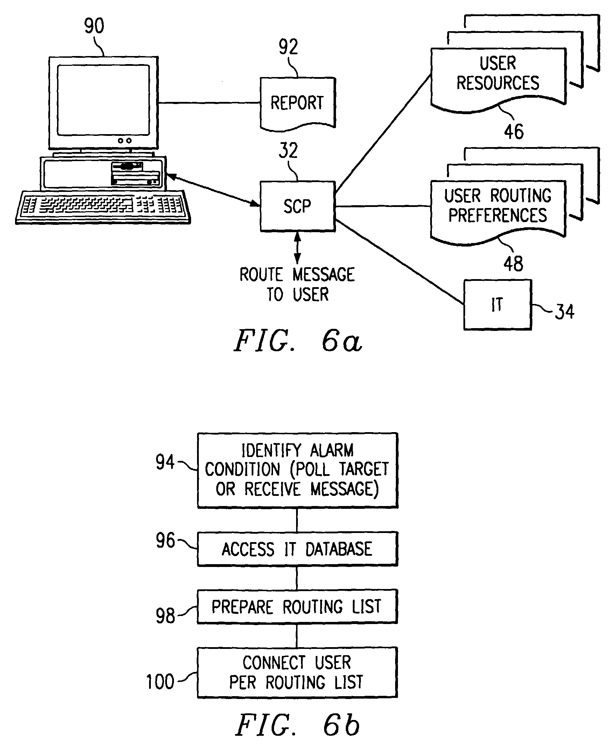

Figures 6a and 6b illustrate an embodiment of the invention wherein calls to a user are initiated in accordance with a routing path responsive to information gathered from a specified source, rather than from an attempted telephone connection. In Figure 6a, a device 90 (shown as a general purpose computer, although other electronic processing devices could be used as well) generates or stores information (hereinafter, referred to as a "report" 92). Device 90 is in communication with SCP 32, either directly or indirectly. SCP 32 is also in communication with user resources database 46 and user routing preference database 48 and an IT system (or multiple IT systems). As described above, the user resources database 46 and the user routing preference database 48 could be maintained by either the SCP 32 or by the IT infrastructure 34.

The operation of this embodiment is illustrated in connection with Figure 6b. In block 94, alarm conditions associated with report 92 are identified. The identification of the alarm conditions could be carried out in a number of different implementations, depending upon the nature of the reports. The reports could be, for example, a database of current stock quotes, status information for a computer network, status information on an assembly line, or other dynamic information type.

Information associated with the report is passed to SCP 32. If the device 90 tracks alarm conditions apart from the SCP 32, the information passed to the SCP 32 may include user identification information, alarm identification information and priority information. For example, for an assembly line, the information passed to a user may be "972-555-1234 (the user's telephone number), assembly line power failure, high". On the other hand, the SCP 32 may receive the raw data of a report from the device 90 and process the data internally to determine whether an alarm condition exists for one or more users. For example, in a stock market application, the SCP 32 could receive the current stock market quotes from device 90and, based on the quotes, determine which alarms conditions had been met and the priority of the alarms based on information previously provided by the users. Further, either the SCP 32 or the device 90 could initiate the transfer of information; either the SCP could periodically poll the device for information, or the device could send information periodically or upon the occurrence of an alarm condition.

In block 96, one or more databases in the IT system 34 are accessed by the SCP 32 to provide information for generating the routing path. This information would typically be user status information of the type discussed above in connection with Figures 1-5. This information, coupled with information from the user resources database 46 and the user routing preferences 48 would be used to generate the routing path in block 98. In block 100, a connection is made between an SRP (service resource peripheral) or other IP (intelligent peripheral) and the user. The IP can provide the message to the user in the appropriate form. For example, if the connection is made between the IP and a phone, the IP can send an appropriate message using text-to-speech technology. A message to an email address or to a can be sent as text using a communication program.

Referring again to Figure 6a, several scenarios will be discussed describing use of the present invention in different implementations. The first implementation involves the use of the invention to monitor a computer network. In this case, device 90 would be a computer on the network that maintained or had access to information regarding the computer network status. Network troubleshooting and protocol analysis software gathers statistics on the various conditions of the network. Alarms are set for various conditions, which may range from relatively minor matters, such as slower than nominal network traffic to major problems, such as hard drive failure. These alarms could be categorized according to their severity - for example, they could be grouped as high-priority, normal priority and low priority. Each priority would be assigned an initial path according to the corresponding entry in the user preferences database 48 (for simplicity of illustration, the paths are the same as shown in the Contact portion of the user preferences database 48 of Figure 3). This initial path could be modified according to the whereabouts of the called party, as described above.

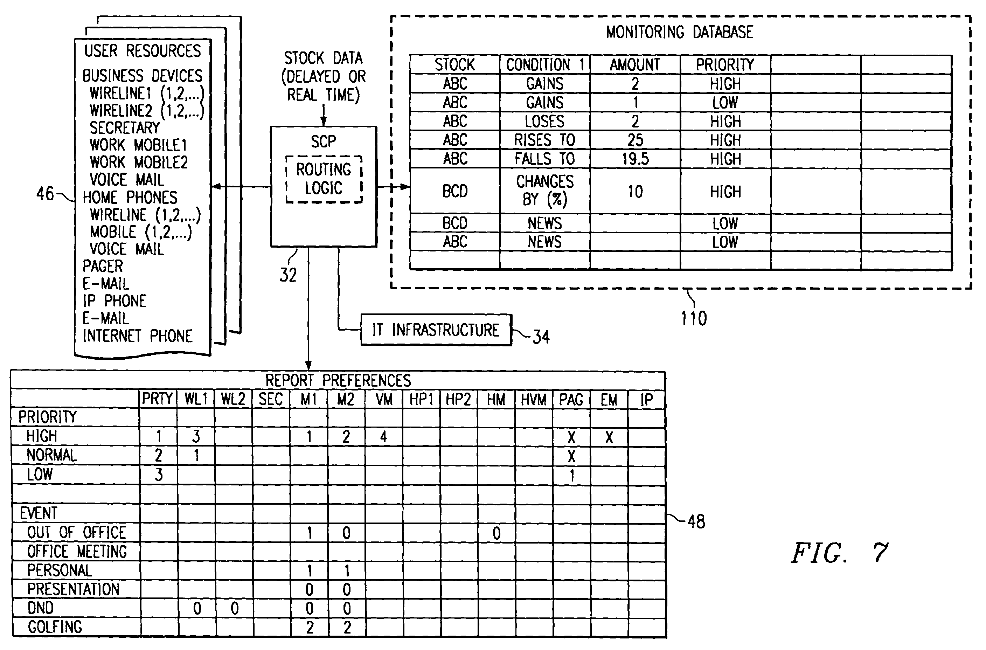

A second embodiment would be a stock alarm program, which would notify a subscriber of changes in stock data. An example of this embodiment is shown. In addition to the User Resources database 46, report preferences database 48 and the databases in the IT infrastructure, the SCP 32 would also have access to a stock monitoring database 110, which would have alarm conditions for each subscriber. The stock monitoring database 110 of Figure 7 shows records for a single subscriber. For each alarm, the user provides the name of the stock, the triggering condition, the triggering threshold, and the priority. For example, in Figure 7, the subscriber has set forth two conditions that will trigger an alarm in connection with stock "BCD". The first alarm condition is triggered if the stock changes by 10% or more (either up or down) during a given day. This alarm is given a "high" priority by the user. If BCD stock rose from 100 to 110, the SCP would initiate a connection through the PSTN/Mobile/VOIP network 30, which would then follow the path defined by the report preference database and the scheduling database in the IT infrastructure 34.

A second condition is triggered if there is news for BCD stock. This is given a "low" priority by the subscriber. In the preferred embodiment, the news could be read to the user, either by using text-to-voice technology for a phone/VOIP connection or by sending the news to an alphanumeric paging device. In the example shown in Figure 7, a low priority alarm, such as the BCD news would be sent directly to the pager. News associated with other stocks, however, may have high priority, and would thus be read to the user over a phone/VOIP device.

In a third embodiment, the invention is used in connection with an assembly line. Information regarding the operation of the assembly line, such as the operating condition of the machinery to the actual output at various points in the assembly line, could be consolidated in a database in a computer. Certain conditions could be flagged if they were below stated normal conditions. The SCP 32 could connect to the computer periodically to check the database for any flagged conditions and, if any flagged conditions existed, generate a voice message (or alphanumeric message for a pager) to be sent to the user according to the priority of the alarm and the current status of the user, according to the scheduling database of the IT infrastructure 32.

The various embodiments described above are set forth only as examples of how the invention could be used. Many other applications could be used in connection with the present invention, such as a doctor monitoring patient conditions.

The present invention provides significant advantages over the prior art. Alarm conditions can be conveyed to a user in a manner that takes into account both the priority of the alarm and the status of the user.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A method of notifying a user of a condition, comprising the steps of:
in response to designated information stored in a processing device, identifying an alarm condition to be conveyed to the user;
identifying one or more databases associated with the user;
retrieving information from said one or more databases regarding the current status of the user; and
generating a routing path comprising connection information for multiple communication devices assigned to said user in a prioritized order in response to said retrieved information.

2. The method of claim 1 wherein said step of identifying an alarm condition includes the step of polling the processing device.

3. The method of claim 1 wherein said step of identifying an alarm condition includes the step of receiving information from the device and comparing the information to predetermined criteria.

4. The method of claim 1 wherein said retrieving step comprises the step of retrieving information from a calendar database associated with the user.

5. The method of claim 4 wherein said calendar database provides information concerning the whereabouts of the user at a current time and wherein said generating step comprises the step of generating a routing path based on the whereabouts of the user.

6. The method of claim 1 wherein said step of identifying an alarm condition includes the step of identifying a priority associated with the alarm condition.

7. The method of claim 1 and further comprising the step of using text-to-speech conversion to provide an audible notification of the alarm to the user.

8. The method of claim 1 wherein said processing device generates stock information.

9. The method of claim 1 wherein said processing device generates computer network status information.

10. The method of claim 1 wherein said processing device generates assembly line status information.

11. Circuitry for conveying alarm conditions to a user, comprising:
a processing device for storing status information;
circuitry for identifying an alarm condition from said status information;
a service control point for identifying one or more databases associated with the user and retrieving information from said one or more databases regarding the current status of the user; and
circuitry for generating a routing path comprising connection information for multiple communication devices assigned to said user in a prioritized order in response to said retrieved information.

12. The circuitry of claim 11 wherein said circuitry for identifying an alarm condition includes circuitry for polling the processing device.

13. The circuitry of claim ii wherein said circuitry for identifying an alarm condition includes circuitry for receiving information from the device and comparing the information to predetermined criteria.

14. The circuitry of claim 11 wherein said service control point includes circuitry for retrieving information from a calendar database associated with the user.

15. The circuitry of claim 14 wherein said calendar database provides information concerning the whereabouts of the user at a current time and wherein said circuitry for generating a routing path comprises circuitry for generating a routing path based on the whereabouts of the user.

16. The circuitry of claim 11 wherein said circuitry for identifying an alarm condition includes circuitry for identifying a priority associated with the alarm condition.

17. The circuitry of claim 11 and further comprising text-to-speech conversion circuitry to provide an audible notification of the alarm to the user.

18. The circuitry of claim 11 wherein said processing device generates stock information.

19. The circuitry of claim 11 wherein said processing device generates computer network status information.

20. The circuitry of claim 10 wherein said processing device generates assembly line status information.
